# EUROPÄISCHE PATENTANMELDUNG

(11) **EP 3 321 067 A1**
(43) Veröffentlichungstag der Anmeldung: **16.05.2018**
(21) Anmeldenummer: 17176128.1
(22) Anmeldetag: 14.06.2017
(51) Int. Cl.: B29C 64/227, B29C 64/20, B33Y 30/00, B22F 3/105, B28B 1/00, B33Y 40/00

(54) **ANLAGE ZUR ADDITIVEN HERSTELLUNG DREIDIMENSIONALER OBJEKTE**

(30) Priorität: 14.11.2016 DE 102016121778
(71) Anmelder: CL Schutzrechtsverwaltungs GmbH, 96215 Lichtenfels (DE)
(72) Erfinder: Stammberger, Jens, 96472 Rödental (DE); Hofmann, Alexander, 96260 Weismain (DE)
(74) Vertreter: Kohl, Fabian Hanno

(57) **Zusammenfassung**

Anlage (1) zur additiven Herstellung dreidimensionaler Objekte, umfassend eine oder mehrere Arbeitsstationen (4, 4a - 4c), welche zur Durchführung wenigstens eines Arbeitsvorgangs im Rahmen der additiven Herstellung dreidimensionaler Objekte eingerichtet sind, sowie eine Transporteinrichtung (2), welche zum Transport von im Rahmen der additiven Herstellung dreidimensionaler Objekte verwendeten Pulvermodulen (3, 3a - 3c) innerhalb einer Arbeitsstation (4, 4a - 4c) und/oder zwischen mehreren Arbeitsstationen (4, 4a - 4c) eingerichtet ist, wobei die Transporteinrichtung (2) mehrere Transporteinheiten (5) umfasst, wobei eine jeweilige Transporteinheit (5) eine eine Tragstruktur (7) umfassende Trageinrichtung (8), welche zum Tragen wenigstens eines in der Tragstruktur (7) angeordneten Pulvermoduls (3, 3a - 3c) eingerichtet ist, eine erste Antriebseinrichtung (10), welche zur Erzeugung einer Bewegung eines in der Tragstruktur (7) der Trageinrichtung (8) angeordneten Pulvermoduls (3, 3a - 3c) relativ zu der Tragstruktur (7) entlang einer, insbesondere linearen, ersten Bewegungsachse (A1), und eine zweite Antriebseinrichtung (12), welcher zur Erzeugung einer Drehbewegung der Tragstruktur (7) nebst einem etwaig darin angeordneten Pulvermodul (3, 3a - 3c) um eine zweite Bewegungsachse (A2) eingerichtet ist, umfasst.

## Beschreibung

Die Erfindung betrifft eine Anlage zur additiven Herstellung dreidimensionaler Objekte, umfassend eine oder mehrere Arbeitsstationen, welche jeweils zur Durchführung wenigstens eines Arbeitsvorgangs im Rahmen der additiven Herstellung dreidimensionaler Objekte eingerichtet sind, sowie eine Transporteinrichtung, welche zum Transport von im Rahmen der additiven Herstellung dreidimensionaler Objekte verwendeten Pulvermodulen innerhalb einer Arbeitsstation und/oder zwischen mehreren Arbeitsstationen eingerichtet ist.

Anlagen zur additiven Herstellung dreidimensionaler Objekte sind dem Grunde nach bekannt. Entsprechende Anlagen umfassen typischerweise mehrere Arbeitsstationen, welche jeweils zur Durchführung wenigstens eines Arbeitsvorgangs im Rahmen der additiven Herstellung dreidimensionaler Objekte eingerichtet sind. Entsprechende Anlagen können eine Transporteinrichtung umfassen, welche zum Transport von im Rahmen der additiven Herstellung dreidimensionaler Objekte verwendeten Pulvermodulen innerhalb einer Arbeitsstation und/oder zwischen mehreren Arbeitsstationen eingerichtet ist.

Entsprechende Transporteinrichtungen sind bis dato derart eingerichtet, dass diese einen Transport eines Pulvermoduls, d. h. z. B. eines Baumoduls, in welchem der eigentliche additive Aufgabe dreidimensionaler Objekte erfolgt, nur entlang einer (linearen) Bewegungsachse ermöglichen. Für bestimmte Konzepte entsprechender Anlagen kann die Bewegung entsprechender Pulvermodule entlang nur einer (linearen) Bewegungsachse nicht ausreichend sein.

Der Erfindung liegt die Aufgabe zugrunde, eine, insbesondere im Hinblick auf die Möglichkeit einer Bewegung eines Pulvermoduls in mehreren Bewegungsfreiheitsgraden, verbesserte Anlage zur additiven Herstellung dreidimensionaler Objekte anzugeben.

Die Aufgabe wird durch eine Anlage gemäß Anspruch 1 gelöst. Die hierzu abhängigen Ansprüche betreffen mögliche Ausführungsformen der Anlage.

Die hierin beschriebene Anlage ("Anlage") dient zur additiven Herstellung dreidimensionaler Objekte, d. h. beispielsweise technischer Bauteile bzw. technischer Bauteilgruppen. Die Anlage umfasst eine oder mehrere Arbeitsstationen, welche jeweils zur Durchführung wenigstens eines Arbeitsvorgangs im Rahmen der additiven Herstellung dreidimensionaler Objekte ("Objekte") eingerichtet sind. Entsprechende Arbeitsvorgänge im Rahmen der additiven Herstellung eines Objekts betreffen einerseits additive Arbeitsvorgänge, d. h. additive Bauvorgänge, in welchen tatsächlich ein additiver Aufbau eines Objekts, insbesondere durch sukzessives schichtweises selektives Belichten und damit einhergehendes sukzessives schichtweises selektives Verfestigen von Baumaterialschichten aus einem verfestigbaren Baumaterial vermittels eines Energiestrahls, erfolgt, sowie vor einem additiven Arbeitsvorgang, d. h. insbesondere vor einem additiven Bauvorgang, durchzuführende bzw. durchgeführte vorbereitende Arbeitsvorgänge, d. h. z. B. Reinigungs- und Inertisierungs- und Temperierungsvorgänge von Pulvermodulen, sowie nach einem additiven Arbeitsvorgang, d. h. insbesondere nach einem additiven Bauvorgang, durchzuführende bzw. durchgeführte nachbereitende Arbeitsvorgänge, d. h. z. B. Auspackvorgänge additiv hergestellter Objekte aus entsprechenden Pulvermodulen.

Eine zur Durchführung additiver Arbeitsvorgänge eingerichtete, auch als Prozessstation zu bezeichnende erste Arbeitsstation kann daher eine Vorrichtung ("Vorrichtung") zur additiven Herstellung von Objekten umfassen. Die Vorrichtung ist zur additiven Herstellung von Objekten, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst die zur Durchführung additiver Bauvorgänge typischerweise erforderlichen Funktionskomponenten. Hierzu zählen insbesondere eine Beschichtungseinrichtung, welche zur Ausbildung selektiv zu verfestigender Baumaterialschichten (in der Bauebene der Vorrichtung) eingerichtet ist, und eine Belichtungseinrichtung, welche zur selektiven Belichtung selektiv zu verfestigender Baumaterialschichten (in der Bauebene der Vorrichtung) eingerichtet ist. Die Beschichtungseinrichtung umfasst typischerweise mehrere Bestandteile, d. h. z. B. ein ein, insbesondere klingenförmiges, Beschichtungswerkzeug umfassendes Beschichtungselement sowie eine Führungseinrichtung zur Führung des Beschichtungselements entlang einer definierten Bewegungsbahn. Auch die Belichtungseinrichtung umfasst typischerweise mehrere Bestandteile, d. h. z. B. eine Strahlerzeugungseinrichtung zur Erzeugung eines Energie- bzw. Laserstrahls, eine Strahlablenkeinrichtung (Scannereinrichtung) zur Ablenkung eines von der Strahlerzeugungseinrichtung erzeugten Energie- bzw. Laserstrahls auf einen zu belichtenden Bereich einer selektiv zu verfestigenden Baumaterialschicht sowie diverse optische Elemente, wie z. B. Linsenelemente, Objektivelemente, etc. Die genannten Funktionskomponenten der Vorrichtung sind typischerweise an oder in einer, typischerweise inertisierbaren, Prozesskammer der Vorrichtung angeordnet oder ausgebildet.

Eine zur Durchführung nachbereitender Arbeitsvorgänge eingerichtete, auch als Nachbearbeitungsstation zu bezeichnende, optionale weitere (bzw. zweite) Arbeitsstation kann eine Vorrichtung zum Auspacken eines additiv hergestellten Objekts umfassen. Die Vorrichtung kann zum Auspacken eines additiv hergestellten Objekts durch Entfernen des das additive hergestellte Objekte umgebenden, typischerweise nicht verfestigten, Baumaterials eingerichtet sein. Die Vorrichtung umfasst hier die zum Entfernen des das additive hergestellte Objekte umgebenden, typischerweise nicht verfestigten, Baumaterials erforderlichen Funktionskomponenten. Hierzu zählt insbesondere eine Saug- und/oder Gebläseeinrichtung, welche zur Erzeugung einer Saug- und/oder Gebläseströmung eingerichtet ist, vermittels welcher das zu entfernende Baumaterial abgesaugt oder abgeblasen werden kann.

Eine zur Durchführung vorbereitender Arbeitsvorgänge eingerichtete, auch als Vorbereitungsstation zu bezeichnende, optionale weitere (bzw. dritte) Arbeitsstation kann eine Vorrichtung zum Reinigen und/oder Inertisieren und/oder Temperieren von Pulvermodulen umfassen. Die Vorrichtung kann zum Reinigen und/oder Inertisieren und/oder Temperieren von Pulvermodulen eingerichtet sein. Die Vorrichtung umfasst hier die zum Reinigen und/oder Inertisieren und/oder Temperieren von Pulvermodulen erforderlichen Funktionskomponenten. Hierzu zählt insbesondere eine Reinigungseinrichtung, welche z. B. zur Erzeugung einer eine pulvermodulseitig umfasste Pulverkammer reinigenden Reinigungsströmung eingerichtet ist, bzw. eine Inertisierungseinrichtung, welche zur Erzeugung einer eine pulvermodulseitig umfasste Pulverkammer inertisierende Inertgasströmung eingerichtet ist, bzw. eine Temperiereinrichtung, welche zur Temperierung eines Pulvermoduls auf eine bestimmte Zieltemperatur eingerichtet ist.

Unabhängig von ihrer konkreten funktionellen Ausführung umfassen jeweilige Arbeitsstationen typischerweise eine eigene Gehäuse- oder Rahmenkonstruktion, an oder in welcher die Funktionskomponenten der jeweiligen Arbeitsstation angeordnet oder ausgebildet sind. Die Arbeitsstationen sind sonach als gesonderte, durch jeweilige Gehäuse- oder Rahmenkonstruktionen räumlich-körperlich definierte Funktionseinheiten der Anlage zu sehen, welche in diversen Konfigurationen relativ zueinander, z. B. in einem oder mehreren Gebäude(abschnitte)n, insbesondere Fabrikhallen, positionierbar sind.

Die Anlage umfasst typischerweise eine Mehrzahl an im Rahmen der additiven Herstellung dreidimensionaler Objekte verwendeter Pulvermodule. Ein jeweiliges Pulvermodul ist zur Aufnahme und/oder Abgabe von Baumaterial eingerichtet und umfasst hierfür typischerweise eine Pulverkammer. Die Pulverkammer begrenzt einen mit Baumaterial befüllbaren Pulverraum. Der Pulverraum ist zumindest seitlich durch Wandungen (Pulverkammerwandungen) der in der Regel hohlquaderartig bzw. hohlzylinderartig ausgebildeten Pulverkammer begrenzt. Bodenseitig ist der Pulverraum durch eine Trägereinrichtung begrenzt. Die Trägereinrichtung ist typischerweise zwischen zwei Endstellungen, d. h. zwischen einer (bezogen auf die Höhe des Pulvermoduls) oberen und einer unteren Endstellung, relativ zu der Pulverkammer bewegbar gelagert. Die bewegbare Lagerung der Trägereinrichtung ermöglicht die Realisierung einer, insbesondere linearen, Bewegung der Trägereinrichtung entlang einer vertikalen Bewegungsachse bzw. in einer vertikalen Bewegungsrichtung. Die bewegbare Lagerung der Trägereinrichtung ist typischerweise durch eine mit dieser gekoppelte, insbesondere (elektro)motorische, Antriebs- und/oder Aktoreinrichtung realisiert.

Konkret kann es sich bei einem Pulvermodul um ein Baumodul, in welchem der eigentliche additive Aufbau von Objekten erfolgt und welches hierfür im Rahmen der Durchführung additiver Bauvorgänge sukzessive schichtweise mit selektiv zu verfestigendem Baumaterial befüllt wird, oder um ein Dosiermodul, über welches im Rahmen der Durchführung additiver Bauvorgänge Baumaterial in die Prozesskammer dosiert wird, oder um ein Auffang- bzw. Überlaufmodul, welches im Rahmen der Durchführung additiver Bauvorgänge mit nicht verfestigtem Baumaterial befüllt wird, handeln.

Weiter umfasst die Anlage eine Transporteinrichtung. Die Transporteinrichtung ist zum Transport von Pulvermodulen innerhalb einer Arbeitsstation bzw., sofern die Anlage mehrere Arbeitsstationen umfasst, zum Transport von Pulvermodulen zwischen verschiedenen Arbeitsstationen der Anlage eingerichtet. Über die Transporteinrichtung sind sonach Transportachsen bzw. -bahnen definiert, entlang welcher Pulvermodule innerhalb von Arbeitsstationen und/oder zwischen Arbeitsstationen bewegt werden können.

Die Transporteinrichtung umfasst mehrere Transporteinheiten. Die Transporteinheiten sind typischerweise in Arbeitsstationen oder in eine weiter unten näher erläuterte, sich zwischen mehreren Arbeitsstationen erstreckende Tunnelstruktur integriert. Die Transporteinheiten sind als solche nicht (linear)bewegbar.

Eine jeweilige Transporteinheit umfasst eine eine Tragstruktur umfassende Trageinrichtung, welche zum Tragen eines in der Tragstruktur angeordneten, d. h. eines in die Tragstruktur bewegten, Pulvermoduls eingerichtet ist. Wie sich im Weiteren ergibt, sind entsprechende in einer Tragstruktur angeordnete Pulvermodule typischerweise bewegbar relativ zu der Tragstruktur gelagert. Die Tragstruktur kann mehrere Tragstrukturelemente umfassen. Die Tragstruktur, d. h. insbesondere entsprechende Tragstrukturelemente, kann bzw. können mit Lagerelementen, welche eine bewegbare Lagerung eines in der Tragstruktur angeordneten Pulvermoduls ermöglichen, ausgestattet sein. Bei entsprechenden Lagerelementen kann es sich z. B. um Gleit- oder Rollenlagerelemente handeln, welche in hierfür vorgesehene aufnahmeartige Führungen (nicht näher bezeichnet) eines Pulvermoduls eingreifen. Eine konkrete Ausführungsform einer entsprechenden Tragstruktur kann eine (im Wesentlichen) U-förmige geometrisch-konstruktive Gestalt mit zwei von einem Haupttragstrukturelement (recht)winklig abragenden schenkelartigen Nebentragstrukturelementen umfassen. Entsprechende Lagerelemente sind an den einander gegenüber liegenden Flächen der Nebentragstrukturelemente angeordnet oder ausgebildet.

Eine jeweilige Transporteinheit umfasst weiterhin eine erste Antriebseinrichtung und eine gesonderte zweite Antriebseinrichtung. Die erste Antriebseinrichtung ist zur Erzeugung einer Bewegung, insbesondere einer Linearbewegung, eines in der Tragstruktur angeordneten Pulvermoduls relativ zu der Tragstruktur entlang einer, insbesondere linearen, ersten Bewegungsachse eingerichtet. Über die erste Antriebseinrichtung ist sonach eine ein in der Tragstruktur angeordnetes Pulvermodul relativ zu der Tragstruktur bewegende erste Antriebskraft erzeugbar. Die zweite Antriebseinrichtung ist zur Erzeugung einer Drehbewegung der Tragstruktur, gegebenenfalls nebst einem darin angeordneten Pulvermodul, um eine zweite Bewegungsachse (Drehachse), insbesondere um eine vertikale Drehachse, eingerichtet. Über die zweite Antriebseinrichtung ist sonach eine eine Tragstruktur, gegebenenfalls nebst einem darin angeordneten Pulvermodul, (dreh)bewegende zweite Antriebskraft erzeugbar. Eine Drehung der Tragstruktur um die zweite Bewegungsachse bedingt gleichermaßen eine Drehung der ersten Bewegungsachse. Mithin ist die erste Bewegungsachse durch eine Drehung der Tragstruktur in eine bestimmte Ausrichtung, insbesondere relativ zu einer ersten Bewegungsachse einer zu der jeweiligen Transporteinheit unmittelbar benachbart angeordneten weiteren Transporteinheit, bringbar.

Insgesamt ermöglicht die Trageinrichtung bzw. eine jeweilige dieser zugehörige Transporteinheit eine Bewegung eines Pulvermoduls in zwei unterschiedlichen Bewegungsfreiheitsgraden. Ein erster Bewegungsfreiheitsgrad ist durch die vermittels der ersten Antriebseinrichtung realisierbare Bewegung eines Pulvermoduls relativ zu der Tragstruktur entlang der ersten Bewegungsachse gegeben, ein zweiter Bewegungsfreiheitsgrad ist durch die vermittels der zweiten Antriebseinrichtung realisierbare Drehbewegung einer Tragstruktur nebst einem darin angeordneten Pulvermodul um die zweite Bewegungsachse gegeben. Es liegt damit eine, insbesondere im Hinblick auf die Möglichkeit einer Bewegung eines Pulvermoduls in mehreren Bewegungsfreiheitsgraden, verbesserte Anlage zur additiven Herstellung dreidimensionaler Objekte vor.

Die erste Antriebseinrichtung kann wenigstens eine erste Antriebseinheit und eine mit der ersten Antriebseinheit gekoppelte Kraftübertragungseinheit umfassen. Die erste Antriebseinheit ist zur Erzeugung der ein Pulvermodul in eine Bewegung entlang der ersten Bewegungsachse versetzenden ersten Antriebskraft eingerichtet. Die erste Antriebseinheit kann als Linearantrieb ausgebildet sein oder einen solchen umfassen. Ein entsprechender Linearantrieb kann als ein hydraulischer oder pneumatischer Antriebszylinder, Gewindetrieb, insbesondere einen Kugel- oder Rollengewindetrieb, oder als Spindeltrieb ausgebildet sein bzw. einen der Genannten umfassen.

Die Kraftübertragungseinheit ist zur Übertragung der von der Antriebseinheit erzeugten ersten Antriebskraft auf das Pulvermodul eingerichtet. Die Kraftübertragungseinheit kann wenigstens ein mit der ersten Antriebseinheit gekoppeltes Kraftübertragungselement umfassen. Das Kraftübertragungselement ist derart mit der ersten Antriebseinheit gekoppelt, dass es bei Erzeugung der ein Pulvermodul in eine Bewegung entlang der ersten Bewegungsachse versetzenden ersten Antriebskraft entlang der ersten Bewegungsachse bewegbar ist.

Das Kraftübertragungselement kann zwischen einer Betriebsposition, in welcher das Kraftübertragungselement mit einem Pulvermodul zur Übertragung der ersten Antriebskraft auf das Pulvermodul koppelbar oder gekoppelt ist, und einer Nichtbetriebsposition, in welcher das Kraftübertragungselement nicht mit einem Pulvermodul zur Übertragung der ersten Antriebskraft auf das Pulvermodul koppelbar oder gekoppelt ist, bewegbar gelagert sein. Die Betriebsposition entspricht typischerweise einer (aus einem das Kraftübertragungselement aufnehmenden Gehäuse) ausgefahrenen Position des Kraftübertragungselements, die Nichtbetriebsposition entspricht typischerweise einer (aus dem das Kraftübertragungselement aufnehmenden Gehäuse) eingefahrenen Position des Kraftübertragungselements. Die Bewegung des Kraftübertragungselements zwischen der Betriebs- und der Nichtbetriebsposition erfolgt über eine der Kraftübertragungseinheit zugehörige Antriebseinheit, welche zur Erzeugung einer, insbesondere linearen, Bewegung des Kraftübertragungselements in die Betriebs- und in die Nichtbetriebsposition eingerichtet ist. Die Antriebseinheit kann analog der ersten Antriebseinheit als Linearantrieb ausgebildet sein bzw. einen solchen umfassen.

Das Kraftübertragungselement kann als ein, insbesondere vorsprungartiges bzw. -förmiges, Formschlusselement ausgebildet sein. In der Betriebsposition (ausgefahrene Position) ist das Formschlusselement mit einem Pulvermodul zur Übertragung der ersten Antriebskraft auf das Pulvermodul formschlüssig koppelbar oder gekoppelt, indem das Formschlusselement formschlüssig mit einem Gegenformschlusselement an dem Pulvermodul zusammenwirkt, d. h. z. B. in ein korrespondierendes, insbesondere aufnahmeartiges bzw. -förmiges, Gegenformschlusselement an dem Pulvermodul eingreift. In der Nichtbetriebsposition (eingefahrene Position) ist das Formschlusselement nicht formschlüssig mit dem Pulvermodul zur Übertragung der ersten Antriebskraft auf das Pulvermodul koppelbar oder gekoppelt, indem das Formschlusselement nicht formschlüssig mit dem Gegenformschlusselement zusammenwirkt, d. h. nicht in das korrespondierende, insbesondere aufnahmeartige, Gegenformschlusselement an dem Pulvermodul eingreift. Selbstverständlich ist prinzipiell auch eine Konfiguration entsprechender Formschluss- und Gegenformschlusselemente möglich, wonach das Gegenformschlusselement insbesondere vorsprungartig bzw. -förmig und das Formschlusselement aufnahmeartig bzw. -förmig ausgebildet ist.

Die zweite Antriebseinrichtung kann wenigstens eine zweite Antriebseinheit umfassen. Die zweite Antriebseinheit ist zur Erzeugung einer die Tragstruktur in eine Drehbewegung um die zweite Bewegungsachse versetzenden zweiten Antriebskraft eingerichtet. Die zweite Antriebseinheit kann als Drehantrieb ausgebildet sein oder einen solchen umfassen. Der Drehantrieb kann die zweite Bewegungsachse bilden bzw. (direkt) in die zweite Bewegungsachse integriert sein. Der Drehantrieb kann z. B. in eine die Tragstruktur an der Arbeitsstation lagernden Lagereinrichtung integriert sein. Die zweite Antriebseinheit kann jedoch auch als Linearantrieb ausgebildet sein oder einen solchen umfassen. Ein entsprechender Linearantrieb kann wiederum als ein hydraulischer oder pneumatischer Antriebszylinder, Gewindetrieb, insbesondere einen Kugel- oder Rollengewindetrieb, oder als Spindeltrieb ausgebildet sein bzw. einen der Genannten umfassen.

Es ist möglich, dass die zweite Antriebseinrichtung zwei zweite Antriebseinheiten umfasst, wobei eine erste zweite Antriebseinheit zur Erzeugung einer die Tragstruktur in eine Drehbewegung in einer ersten Drehrichtung, z. B. Uhrzeigersinn, um die zweite Bewegungsachse versetzenden zweiten Antriebskraft eingerichtet ist und eine zweite Antriebseinheit zur Erzeugung einer die Tragstruktur in eine Drehbewegung in einer zweiten Drehrichtung, z. B. Gegenuhrzeigersinn, um die zweite Bewegungsachse versetzenden zweiten Antriebskraft eingerichtet ist.

Insbesondere in dem Fall, in dem eine zweite Antriebseinheit als Linearantrieb ausgebildet ist bzw. einen solchen umfasst, kann die zweite Antriebseinrichtung eine mit der zweiten Antriebseinheit gekoppelte Kraftübertragungseinheit umfassen, welche zur Übertragung der von der zweiten Antriebseinheit erzeugten zweiten Antriebskraft auf die Tragstruktur eingerichtet ist. Die Kraftübertragungseinheit kann wenigstens ein mit der Tragstruktur gekoppeltes Kraftübertragungselement, insbesondere ein Schub- oder Zugelement, welches zur Übertragung von Schub- oder Zugkräften eingerichtet ist, d. h. z. B. einen Seilzug, umfassen. Ein jeweiliges Kraftübertragungselement ist über einen der Tragstruktur zugeordneten Befestigungspunkt typischerweise außermittig an der Tragstruktur befestigt.

Es wurde erwähnt, dass die Transporteinrichtung zum Transport von Pulvermodulen innerhalb einer Arbeitsstation eingerichtet sein kann. Dabei kann eine Arbeitsstation eine sich durch die Arbeitsstation erstreckende, insbesondere einen Teil einer Transportachse der Anlage bildenden, typischerweise längliche, Transportbahn und wenigstens eine mit dieser kommunizierende pulvermodulspezifische Pulvermodularbeitsposition umfassen. Eine pulvermodulspezifische Pulvermodularbeitsposition ist eine Position eines Pulvermoduls, in welcher ein jeweiliges Pulvermodul für einen Betrieb in seiner bestimmungsgemäßen Verwendung in der jeweiligen Arbeitsstation angeordnet ist. Die Transporteinrichtung ist hier zur Bewegung bzw. zum Transport eines Pulvermoduls entlang der sich durch die Arbeitsstation erstreckenden Transportbahn und/oder zur Bewegung bzw. zum Transport eines Pulvermoduls von der Transportbahn in die wenigstens eine Pulvermodularbeitsposition und/oder zum Transport eines Pulvermoduls von der wenigstens einen Pulvermodularbeitsposition in die Transportbahn eingerichtet. Die Pulvermodularbeitsposition erstrecken sich typischerweise entlang der Transportbahn bzw. sind parallel zu dieser angeordnet.

Beispielsweise kann eine Arbeitsstation in Form einer Prozessstation eine sich durch diese erstreckende Transportbahn und, insbesondere benachbart angeordnete, mit der Transportbahn kommunizierende Pulvermodularbeitspositionen für ein Dosiermodul, ein Baumaterial und ein Überlaufmodul umfassen. Die Pulvermodularbeitspositionen sind typischerweise in der genannten Reihenfolge nacheinander geschaltet angeordnet.

Da die Pulvermodularbeitspositionen typischerweise (recht)winklig relativ zu der Transportbahn angeordnet sind, ist zum Zwecke des Transports bzw. der Bewegung eines Pulvermoduls von einer Pulvermodularbeitsposition in die Transportbahn bzw. umgekehrt typischerweise eine Drehung des Pulvermoduls um die zweite Bewegungsachse und eine Bewegung des Pulvermoduls entlang der ersten Bewegungsachse notwendig.

Die Transportbahn ist, wie erwähnt, typischerweise länglich. Die Transportbahn ist daher typischerweise durch mehrere nacheinander geschaltet angeordnete oder ausgebildete Transporteinheiten gebildet. Eine Pulvermodularbeitsposition ist dagegen typischerweise nur durch eine (einzige) Transporteinheit gebildet. In allen Fällen sind die Transporteinheiten der Transporteinrichtung derart anordenbar oder angeordnet, dass ein Pulvermodul von einer ersten Transporteinheit auf eine dieser unmittelbar benachbart angeordnete weitere Transporteinheit übergebbar ist, mithin kann ein Pulvermodul von einer ersten Transporteinheit auf eine dieser unmittelbar benachbart angeordnete weitere Transporteinheit bewegt bzw. übergeben werden.

Für eine Übergabe eines Pulvermoduls von einer ersten Transporteinheit auf eine dieser unmittelbar benachbart angeordnete weitere Transporteinheit ist eine gleiche Ausrichtung der ersten Bewegungsachsen der Transporteinheiten erforderlich. Eine Übergabe eines Pulvermoduls von einer ersten Transporteinheit auf eine dieser unmittelbar benachbart angeordnete weitere Transporteinheit ist sonach mit einer Bewegung des Pulvermoduls entlang der jeweiligen ersten Bewegungsachse verbunden. Je nach räumlicher Ausrichtung der jeweiligen ersten Bewegungsachsen der Transporteinheiten relativ zueinander kann für eine Übergabe eines Pulvermoduls von einer ersten Transporteinheit auf eine dieser unmittelbar benachbart angeordnete weitere Transporteinheit (zusätzlich) eine Drehung der Tragstruktur um die zweite Bewegungsachse erforderlich sein. Die Drehung der Tragstruktur dient dazu, die jeweiligen transporteinheitseitigen ersten Bewegungsachsen gleich auszurichten. Eine Drehposition, in welcher die Tragstruktur einer ersten Transporteinheit derart ausgerichtet ist, dass die erste Bewegungsachse der ersten Transporteinheit gleich der ersten Bewegungsachse einer dieser unmittelbar benachbart angeordneten weiteren Transporteinheit ist, kann als Übergabeposition der Transporteinheit bezeichnet werden.

Es wurde erwähnt, dass die Transporteinrichtung auch zum Transport von Pulvermodulen zwischen wenigstens zwei Arbeitsstationen eingerichtet sein kann. Die zwei Arbeitsstationen können unmittelbar benachbart angeordnet sein. Dabei können eine erste und eine unmittelbar benachbart angeordnete weitere Arbeitsstation jeweils eine sich durch die erste Arbeitsstation erstreckende Transportbahn umfassen. Die Transportbahn der ersten Arbeitsstation und die Transportbahn der weiteren Arbeitsstation sind dabei miteinander fluchtend angeordnet oder ausgebildet und gehen typischerweise unmittelbar ineinander über, sodass ein Pulvermodul von der Transportbahn der ersten Arbeitsstation auf die Transportbahn der weiteren Arbeitsstation, oder umgekehrt, bewegbar bzw. übergebbar ist. Die Transporteinrichtung ist hier zum Transport eines Pulvermoduls entlang der sich durch die jeweilige Arbeitsstation erstreckenden Transportbahn und/oder zum Transport eines Pulvermoduls von der Transportbahn einer Arbeitsstation in eine Pulvermodularbeitsposition der Arbeitsstation und/oder zum Transport eines Pulvermoduls von einer Pulvermodularbeitsposition einer Arbeitsstation in die Transportbahn der Arbeitsstation eingerichtet ist.

Die Transporteinrichtung kann auch zum Transport von Pulvermodulen zwischen wenigstens zwei räumlich beabstandet angeordneten Arbeitsstationen eingerichtet sein, wobei eine erste Arbeitsstation eine sich durch die erste Arbeitsstation erstreckende Transportbahn umfasst, und eine unmittelbar benachbart angeordnete weitere Arbeitsstation eine sich durch die weitere Arbeitsstation erstreckende Transportbahn umfasst, und eine sich zwischen der ersten Arbeitsstation und der wenigstens einen weiteren Arbeitsstation erstreckende Tunnelstruktur eine sich durch die Tunnelstruktur erstreckende Transportbahn umfasst. Die Transportbahn der ersten Arbeitsstation und die Transportbahn der Tunnelstruktur sowie die Transportbahn der zweiten Arbeitsstation und die Transportbahn der Tunnelstruktur sind jeweils miteinander fluchtend angeordnet oder ausgebildet und gehen typischerweise unmittelbar ineinander über, sodass ein Pulvermodul von der Transportbahn der ersten Arbeitsstation auf die Transportbahn der Tunnelstruktur, oder umgekehrt, und ein Pulvermodul von der Transportbahn der zweiten Arbeitsstation auf die Transportbahn der Tunnelstruktur, oder umgekehrt, bewegbar bzw. übergebbar ist.

Die Anlage kann sonach eine Tunnelstruktur umfassen. Die Tunnelstruktur weist einen oder mehrere Tunnelabschnitte auf, in welchem bzw. durch welchen wenigstens ein Pulvermodul bewegbar ist. In einem jeweiligen Tunnelabschnitt ist wenigstens eine Transporteinheit und somit eine durch in dieser angeordnete Transporteinheit(en) definierte Transportbahn, entlang welcher ein Pulvermodul durch den Tunnelabschnitt bewegbar ist, ausgebildet oder angeordnet. Es ist möglich, in einem Tunnelabschnitt zumindest abschnittsweise mehrere Transportbahnen, d. h. z. B. benachbart, insbesondere parallel, angeordnete Transportbahnen in einer oder mehreren Ebenen, auszubilden oder anzuordnen. Die in jeweiligen Arbeitsstationen ausgebildeten Transportbahnen können ebenso als Tunnelabschnitte erachtet werden.

Die Funktion der Tunnelstruktur bzw. der dieser zugehörigen Tunnelabschnitte besteht darin, wenigstens zwei unterschiedliche Arbeitsstationen der Anlage unmittelbar oder mittelbar, d. h. z. B. unter Zwischenschaltung wenigstens eines weiteren Tunnelabschnitts und/oder einer weiteren Arbeitsstation der Anlage, miteinander zu verbinden. Die Verbindung jeweiliger Arbeitsstationen ermöglicht ein Bewegen jeweiliger Pulvermodule zwischen unterschiedlichen Arbeitsstationen der Anlage. Über einen oder mehrere Tunnelabschnitte kann z. B. eine der Anlage zugehörige Prozessstation mit einer der Anlage zugehörigen Nachbearbeitungsstation verbunden werden. Bewegungen jeweiliger Pulvermodule durch die Tunnelstruktur sind insbesondere vollautomatisiert möglich.

Je nach konkreter Ausbildung der Tunnelstruktur kann es möglich sein, dass die Transportbahn, entlang welcher ein Pulvermodul ausgehend von einer ersten Arbeitsstation der Anlage zurück in eine weitere Arbeitsstation der Anlage bewegt wird, anders ist als die Transportbahn, entlang welcher das Pulvermodul ausgehend von der ersten Arbeitsstation in die weitere Arbeitsstation bewegt wurde. Die Auswahl einer Transportbahn eines Pulvermoduls zwischen jeweiligen Arbeitsstationen kann auf Grundlage bestimmter Priorisierungen bestimmter Pulvermodule erfolgen. Für höher priorisierte Pulvermodule können streckenmäßig kürzere bzw. schnellere Transportbahnen ausgewählt werden als für niedriger priorisierte Pulvermodule. Gleichermaßen können höher priorisierte Pulvermodule mit einer im Vergleich zu niedriger priorisierten Pulvermodulen höheren Geschwindigkeit bewegt werden.

Die Steuerung sämtlicher Bewegungen der in der Anlage, insbesondere in der Tunnelstruktur, bewegten Pulvermodule erfolgt über eine zentrale Steuerungseinrichtung, welche zweckmäßig unmittelbar oder mittelbar mit jeweiligen Pulvermodulen, welche hierfür mit geeigneten, Kommunikationseinrichtungen ausgestattet sein können, z. B. funkbasiert, kommuniziert. In der Steuerungseinrichtung liegen zweckmäßig sämtliche für die Bewegung jeweiliger Pulvermodule innerhalb der Anlage bzw. der Tunnelstruktur relevanten Informationen, d. h. insbesondere jeweilige Bewegungsinformation, d. h. z. B. Geschwindigkeitsinformation, jeweilige Positionsinformation, d. h. z. B. Start- und Zielinformationen, jeweilige Priorisierungsinformationen, etc. vor. Die Steuerung der Bewegungen der in der Anlage bzw. in der Tunnelstruktur bewegten Pulvermodule kann vollautomatisch erfolgen.

Wie erwähnt, umfasst die Tunnelstruktur einen oder mehrere Tunnelabschnitte. Ein jeweiliger Tunnelabschnitt begrenzt wenigstens einen Hohlraum, in welchem jeweilige Transporteinheiten zum Transport von Pulvermodulen angeordnet sind. Im Übrigen ist die geometrisch-konstruktive Ausgestaltung eines jeweiligen Tunnelabschnitts mit der Maßgabe, dass wenigstens ein Pulvermodul in diesem bzw. durch diesen bewegbar ist, beliebig wählbar. Ein jeweiliger Tunnelabschnitt kann z. B. eine runde, rundliche oder eckige Querschnittsfläche aufweisen. Im Hinblick auf seine Längserstreckung kann ein jeweiliger Tunnelabschnitt zumindest abschnittsweise, insbesondere vollständig, geradlinig oder zumindest abschnittsweise, insbesondere vollständig, gebogen oder gekrümmt verlaufend ausgebildet sein. Selbstverständlich kann ein jeweiliger Tunnelabschnitt aus mehreren Tunnelabschnittsegmenten, welche unter Ausbildung des jeweiligen Tunnelabschnitts miteinander verbindbar oder verbunden sind, gebildet sein.

Ein jeweiliger Tunnelabschnitt kann in wenigstens einen weiteren, z. B. winklig zu diesem verlaufenden, Tunnelabschnitt münden. Die Tunnelstruktur kann durch eine entsprechende Anordnung von mit Tunnelabschnitten mit darin angeordneten Transporteinheiten - ähnlich einem aus dem Bahnverkehr bekannten Gleis- oder Schienensystem - mehrere an definierten Positionen ineinander mündende Tunnelabschnitte umfassen. Mehrere Tunnelabschnitte können zumindest abschnittsweise neben-, über- oder untereinander verlaufen. Die Tunnelstruktur kann sonach mehrere zumindest abschnittsweise neben-, über- oder untereinander, mithin in unterschiedlichen (horizontalen und/oder vertikalen) Ebenen verlaufende Tunnelabschnitte umfassen.

Ein jeweiliger Tunnelabschnitt kann inertisierbar sein, d. h. in diesem kann eine inerte Atmosphäre ausgebildet und aufrechterhalten werden. In analoger Weise kann in einem jeweiligen Tunnelabschnitt ein bestimmtes Druckniveau, d. h. z. B. ein Über- oder Unterdruck, ausgebildet und aufrechterhalten werden.

Um mit der Tunnelstruktur verbunden werden zu können, können einzelne, mehrere oder sämtliche stationäre Arbeitsstationen der Anlage einen Verbindungs- bzw. Übergabeabschnitt aufweisen, über welchen diese mit der Tunnelstruktur verbindbar oder verbunden sind. Ein Pulvermodul ist bei einer Übergabe von einer Arbeitsstation in die Tunnelstruktur, oder umgekehrt, sonach durch einen jeweiligen Verbindungsabschnitt zu bewegen.

Die Erfindung ist anhand von Ausführungsbeispielen in den Zeichnungsfiguren näher erläutert. Dabei zeigt:
- Fig. 1: eine Prinzipdarstellung einer Transporteinheit einer Transporteinrichtung einer Anlage zur additiven Herstellung dreidimensionaler Objekte gemäß einem Ausführungsbeispiel;
- Fig. 2: eine Prinzipdarstellung einer Transporteinrichtung einer Anlage zur additiven Herstellung dreidimensionaler Objekte gemäß einem Ausführungsbeispiel; und
- Fig. 3, 4: je eine Prinzipdarstellung einer Anlage zur additiven Herstellung dreidimensionaler Objekte gemäß einem Ausführungsbeispiel.

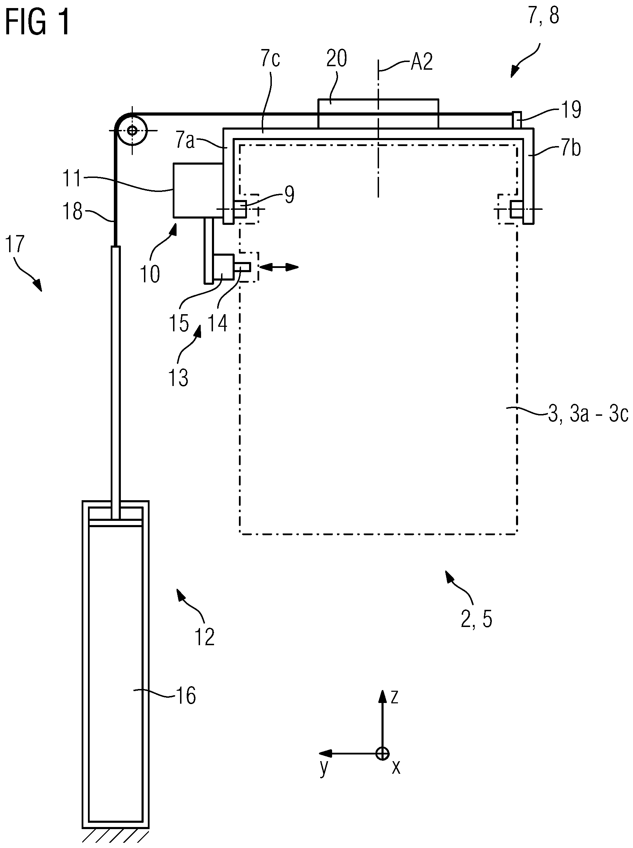

Fig. 1 zeigt eine Prinzipdarstellung einer Transporteinheit 5 einer Transporteinrichtung 2 einer Anlage 1 zur additiven Herstellung dreidimensionaler Objekte gemäß einem Ausführungsbeispiel. Die in Fig. 1 gezeigte Transporteinheit 5 ist in einer Frontansicht dargestellt.

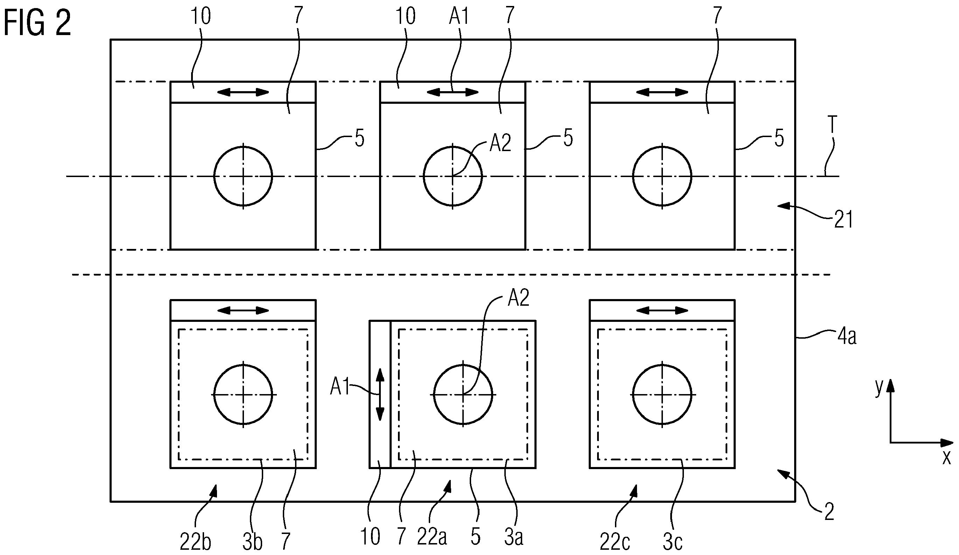

Fig. 2 zeigt eine Prinzipdarstellung einer Transporteinrichtung 2 einer Anlage 1 zur additiven Herstellung dreidimensionaler Objekte gemäß einem Ausführungsbeispiel. Die in Fig. 2 gezeigte Transporteinrichtung 2 ist in einer Aufsicht dargestellt.

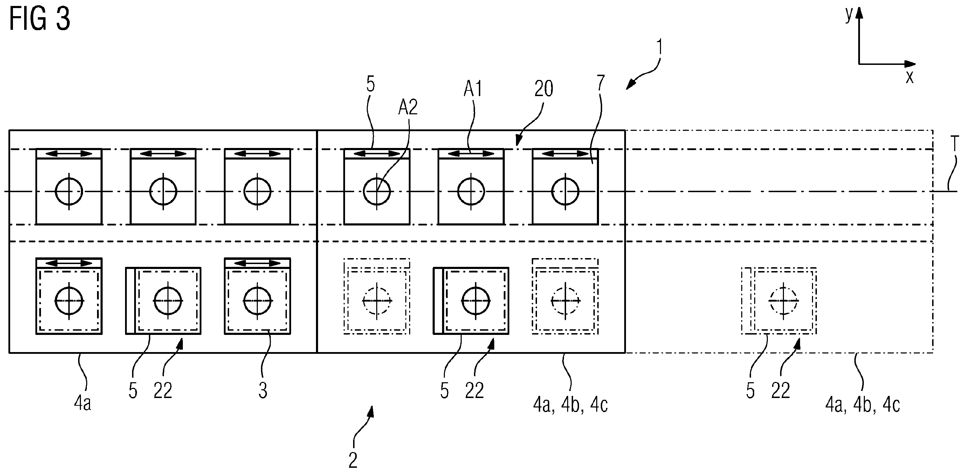

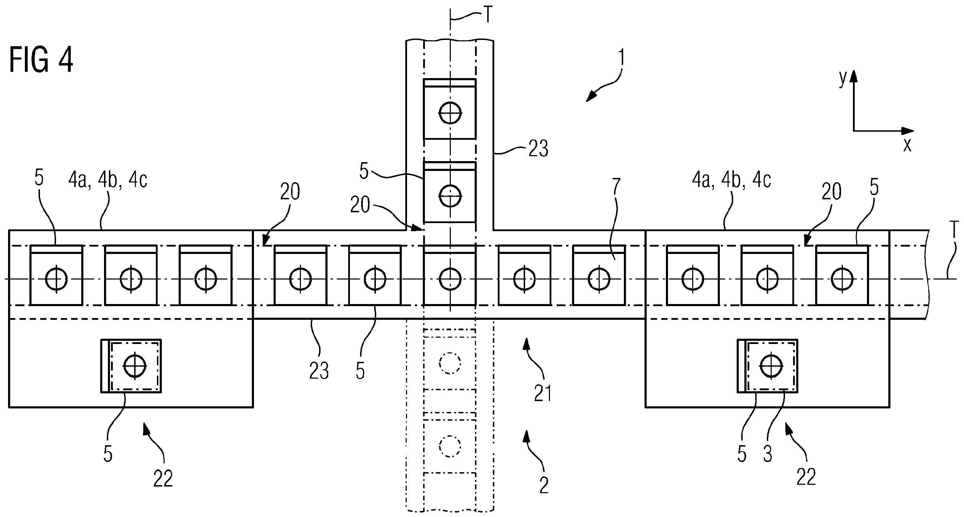

Die Fig. 3, 4 zeigen je eine Prinzipdarstellung einer Anlage 1 zur additiven Herstellung dreidimensionaler Objekte gemäß einem Ausführungsbeispiel. Die in den Fig. 3, 4 gezeigten Anlage 1 sind in einer Aufsicht dargestellt.

Die Anlage 1 dient zur additiven Herstellung dreidimensionaler Objekte, d. h. beispielsweise technischer Bauteile bzw. technischer Bauteilgruppen. Die Anlage 1 umfasst mehrere Arbeitsstationen 4, 4a - 4c, welche jeweils zur Durchführung wenigstens eines Arbeitsvorgangs im Rahmen der additiven Herstellung dreidimensionaler Objekte eingerichtet sind. Entsprechende Arbeitsvorgänge betreffen einerseits additive Arbeitsvorgänge, d. h. additive Bauvorgänge, in welchen tatsächlich ein additiver Aufbau eines Objekts erfolgt, vor einem additiven Arbeits- bzw. Bauvorgang durchzuführende bzw. durchgeführte vorbereitende Arbeitsvorgänge, sowie nach einem additiven Arbeits- bzw. Bauvorgang, durchzuführende bzw. durchgeführte nachbereitende Arbeitsvorgänge.

Eine zur Durchführung additiver Arbeitsvorgänge eingerichtete, auch als Prozessstation zu bezeichnende erste Arbeitsstation 4a kann daher eine Vorrichtung (nicht gezeigt) zur additiven Herstellung von Objekten umfassen. Die Vorrichtung ist zur additiven Herstellung von Objekten durch sukzessives schichtweises selektives Belichten und damit einhergehendes sukzessives schichtweises selektives Verfestigen von Baumaterialschichten aus einem verfestigbaren Baumaterial eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein. Die Vorrichtung umfasst die zur Durchführung additiver Bauvorgänge erforderlichen Funktionskomponenten (nicht gezeigt). Hierzu zählen insbesondere eine Beschichtungseinrichtung, welche zur Ausbildung selektiv zu verfestigender Baumaterialschichten eingerichtet ist, und eine Belichtungseinrichtung, welche zur selektiven Belichtung selektiv zu verfestigender Baumaterialschichten eingerichtet ist. Die genannten Funktionskomponenten der Vorrichtung sind typischerweise an oder in einer inertisierbaren Prozesskammer der Vorrichtung angeordnet oder ausgebildet.

Eine zur Durchführung nachbereitender Arbeitsvorgänge eingerichtete, auch als Nachbearbeitungsstation zu bezeichnende, optionale weitere (bzw. zweite) Arbeitsstation 4b kann eine Vorrichtung (nicht gezeigt) zum Auspacken eines additiv hergestellten Objekts umfassen. Die Vorrichtung kann zum Auspacken eines additiv hergestellten Objekts durch Entfernen des das additive hergestellte Objekte umgebenden, typischerweise nicht verfestigten, Baumaterials eingerichtet sein.

Eine zur Durchführung vorbereitender Arbeitsvorgänge eingerichtete, auch als Vorbereitungsstation zu bezeichnende, optionale weitere (bzw. dritte) Arbeitsstation 4c kann eine Vorrichtung (nicht gezeigt) zum Reinigen und/oder Inertisieren und/oder Temperieren von Pulvermodulen 3, 3a - 3c umfassen. Die Vorrichtung kann zum Reinigen und/oder Inertisieren und/oder Temperieren von Pulvermodulen eingerichtet sein.

Unabhängig von ihrer konkreten funktionellen Ausführung umfassen jeweilige Arbeitsstationen 4, 4a - 4c eine eigene Gehäuse- oder Rahmenkonstruktion (nicht näher bezeichnet), an oder in welcher die Funktionskomponenten der jeweiligen Arbeitsstation 4, 4a - 4c angeordnet oder ausgebildet sind. Die Arbeitsstationen 4, 4a - 4c sind als gesonderte, durch jeweilige Gehäuse- oder Rahmenkonstruktionen räumlich-körperlich definierte Funktionseinheiten der Anlage 1 zu sehen, welche, wie sich aus den Fig. 3, 4 ergibt, in diversen Konfigurationen relativ zueinander, z. B. in einem oder mehreren Gebäude(abschnitte)n, insbesondere Fabrikhallen, positionierbar sind.

Die Anlage 1 umfasst eine Mehrzahl an im Rahmen der additiven Herstellung dreidimensionaler Objekte verwendeter Pulvermodule 3, 3a - 3c. Ein jeweiliges Pulvermodul 3, 3a - 3c ist zur Aufnahme und/oder Abgabe von Baumaterial eingerichtet und umfasst hierfür typischerweise eine Pulverkammer (nicht gezeigt). Die Pulverkammer begrenzt einen mit Baumaterial befüllbaren Pulverraum. Der Pulverraum ist zumindest seitlich durch Wandungen (Pulverkammerwandungen) der in der Regel hohlquaderartig bzw. hohlzylinderartig ausgebildeten Pulverkammer begrenzt. Bodenseitig ist der Pulverraum durch eine Trägereinrichtung (nicht gezeigt) begrenzt. Die Trägereinrichtung ist typischerweise zwischen zwei Endstellungen, d. h. zwischen einer (bezogen auf die Höhe des Pulvermoduls 3) oberen und einer unteren Endstellung, relativ zu der Pulverkammer bewegbar gelagert. Die bewegbare Lagerung der Trägereinrichtung ermöglicht die Realisierung einer, insbesondere linearen, Bewegung der Trägereinrichtung entlang einer vertikalen Bewegungsachse bzw. in einer vertikalen Bewegungsrichtung. Die bewegbare Lagerung der Trägereinrichtung ist typischerweise durch eine mit dieser gekoppelte, insbesondere (elektro)motorische, Antriebs- und/oder Aktoreinrichtung (nicht gezeigt) realisiert.

Bei einem Pulvermodul 3 kann es sich z. B. um ein Baumodul 3a, in welchem der eigentliche additive Aufbau von Objekten erfolgt und welches hierfür im Rahmen der Durchführung additiver Bauvorgänge sukzessive schichtweise mit selektiv zu verfestigendem Baumaterial befüllt wird, oder um ein Dosiermodul 3b, über welches im Rahmen der Durchführung additiver Bauvorgänge Baumaterial in die Prozesskammer dosiert wird, oder um ein Auffang- bzw. Überlaufmodul 3c, welches im Rahmen der Durchführung additiver Bauvorgänge mit nicht verfestigtem Baumaterial befüllt wird, handeln.

Die Transporteinrichtung 2 ist zum Transport von Pulvermodulen 3, 3a - 3c innerhalb einer Arbeitsstation 4, 4a - 4c bzw., sofern die Anlage 1 mehrere Arbeitsstationen 4, 4a - 4c umfasst, zum Transport von Pulvermodulen 3, 3a - 3c zwischen verschiedenen Arbeitsstationen 4, 4a - 4c der Anlage 1 eingerichtet. Über die Transporteinrichtung 2 sind Transportachsen bzw. -bahnen definiert, entlang welcher Pulvermodule 3, 3a - 3c innerhalb von Arbeitsstationen 4, 4a - 4c und/oder zwischen Arbeitsstationen 4, 4a - 4c bewegt werden können.

Anhand von Fig. 2 ist ersichtlich, dass die Transporteinrichtung 2 mehrere Transporteinheiten 5 umfasst. Die Transporteinheiten 5 sind in Arbeitsstationen 4, 4a - 4c oder in eine weiter unten näher erläuterte, sich zwischen mehreren Arbeitsstationen erstreckende Tunnelstruktur 6 integriert. Die Transporteinheiten 5 sind als solche nicht (linear)bewegbar.

Anhand von Fig. 1 ist ersichtlich, dass eine Transporteinheit 5 eine eine Tragstruktur 7 umfassende Trageinrichtung 8, welche zum Tragen eines in der Tragstruktur 7 angeordneten, d. h. eines in die Tragstruktur 7 bewegten, Pulvermoduls 3 eingerichtet ist. Die Tragstruktur 7 umfasst mehrere Tragstrukturelemente 7a - 7c. Die Tragstrukturelemente 7a, 7b sind mit Lagerelementen 9, welche eine bewegbare Lagerung eines in der Tragstruktur 7 angeordneten Pulvermoduls 3 ermöglichen, ausgestattet. Bei entsprechenden Lagerelementen 9 kann es sich um Gleit- oder Rollenlagerelemente handeln, welche in aufnahmeartige Führungen (nicht näher bezeichnet) in dem Pulvermodul 3 eingreifen. Eine, wie in Fig. 1 gezeigte, konkrete Ausführungsform einer Tragstruktur 7 weist eine (im Wesentlichen) U-förmige geometrisch-konstruktive Gestalt mit zwei von einem Haupttragstrukturelement 7c (recht)winklig abragenden schenkelartigen Nebentragstrukturelementen 7a, 7b. Die Lagerelemente 9 sind an den einander gegenüber liegenden Flächen der Nebentragstrukturelemente 7a, 7b angeordnet.

Die Transporteinheit 5 umfasst weiterhin eine erste Antriebseinrichtung 10 und eine gesonderte zweite Antriebseinrichtung 12. Die erste Antriebseinrichtung 10 ist zur Erzeugung einer Linearbewegung eines in der Tragstruktur 7 angeordneten Pulvermoduls 3 relativ zu der Tragstruktur 7 entlang einer linearen ersten Bewegungsachse A1 eingerichtet. Die zweite Antriebseinrichtung 12 ist zur Erzeugung einer Drehbewegung der Tragstruktur 7, gegebenenfalls nebst einem darin angeordneten Pulvermodul 3, um eine zweite Bewegungsachse A2, d. h. um eine vertikale Drehachse, eingerichtet. Anhand von Fig. 2 ist ersichtlich, dass eine Drehung der Tragstruktur 7 um die zweite Bewegungsachse A2 gleichermaßen eine Drehung der ersten Bewegungsachse A1 bedingt. Mithin ist die erste Bewegungsachse A1 durch eine Drehung der Tragstruktur 7 in eine bestimmte Ausrichtung, insbesondere relativ zu einer ersten Bewegungsachse A1 einer zu der jeweiligen Transporteinheit 5 unmittelbar benachbart angeordneten weiteren Transporteinheit 5, bringbar.

Insgesamt ermöglicht die Trageinrichtung 2 bzw. eine jeweilige dieser zugehörige Transporteinheit 5 eine Bewegung eines Pulvermoduls 3 in zwei unterschiedlichen Bewegungsfreiheitsgraden. Ein erster Bewegungsfreiheitsgrad ist durch die vermittels der ersten Antriebseinrichtung 10 realisierbare Bewegung eines Pulvermoduls 3 relativ zu der Tragstruktur 7 entlang der ersten Bewegungsachse A1 gegeben, ein zweiter Bewegungsfreiheitsgrad ist durch die vermittels der zweiten Antriebseinrichtung 12 realisierbare Drehbewegung einer Tragstruktur 7 nebst einem darin angeordneten Pulvermodul 3 um die zweite Bewegungsachse A2 gegeben.

Die erste Antriebseinrichtung 10 umfasst eine Antriebseinheit 11 und eine mit dieser gekoppelte Kraftübertragungseinheit 13 umfassen. Die erste Antriebseinheit 10 ist zur Erzeugung der ein Pulvermodul 3 in eine Bewegung entlang der ersten Bewegungsachse A1 versetzenden Antriebskraft eingerichtet. Die erste Antriebseinheit 11 ist als Linearantrieb ausgebildet. Ein entsprechender Linearantrieb kann als ein hydraulischer oder pneumatischer Antriebszylinder, Gewindetrieb, insbesondere einen Kugel- oder Rollengewindetrieb, oder als Spindeltrieb ausgebildet sein.

Die Kraftübertragungseinheit 13 ist zur Übertragung der von der Antriebseinheit 11 erzeugten Antriebskraft auf das Pulvermodul 3 eingerichtet. Die Kraftübertragungseinheit 13 umfasst wenigstens ein mit der Antriebseinheit 11 gekoppeltes Kraftübertragungselement 14. Das Kraftübertragungselement 14 ist derart mit der Antriebseinheit 11 gekoppelt, dass es bei Erzeugung der ein Pulvermodul 3 in eine Bewegung entlang der ersten Bewegungsachse A1 versetzenden ersten Antriebskraft entlang der ersten Bewegungsachse A1 bewegbar ist.

Das Kraftübertragungselement 14 ist zwischen einer Betriebsposition, in welcher es mit einem Pulvermodul 3 zur Übertragung der ersten Antriebskraft auf das Pulvermodul 3 koppelbar oder gekoppelt ist, und einer Nichtbetriebsposition, in welcher es nicht mit einem Pulvermodul 3 zur Übertragung der ersten Antriebskraft auf das Pulvermodul 3 koppelbar oder gekoppelt ist, bewegbar gelagert. Die in Fig. 1 gezeigte Betriebsposition entspricht einer aus einem das Kraftübertragungselement 14 aufnehmenden Gehäuse 15 ausgefahrenen Position des Kraftübertragungselements 14, die Nichtbetriebsposition entspricht einer aus dem das Kraftübertragungselement 14 aufnehmenden Gehäuse 15 eingefahrenen Position des Kraftübertragungselements 14. Die Bewegung des Kraftübertragungselements 14 zwischen der Betriebs- und der Nichtbetriebsposition erfolgt über eine der Kraftübertragungseinheit 13 zugehörige, in dem Gehäuse 15 angeordnete oder ausgebildete Antriebseinheit (nicht näher gezeigt), welche zur Erzeugung einer linearen Bewegung des Kraftübertragungselements 14 in die Betriebs- bzw. in die Nichtbetriebsposition eingerichtet ist. Die Antriebseinheit ist analog der Antriebseinheit 11 als Linearantrieb ausgebildet.

Das Kraftübertragungselement 14 ist in dem Ausführungsbeispiel gemäß Fig. 1 als ein vorsprungartiges Formschlusselement ausgebildet. In der Betriebsposition (ausgefahrene Position) ist das Formschlusselement mit einem Pulvermodul 3 zur Übertragung der ersten Antriebskraft auf das Pulvermodul 3 formschlüssig koppelbar oder gekoppelt, indem das Formschlusselement formschlüssig mit einem Gegenformschlusselement an dem Pulvermodul 3 zusammenwirkt, d. h., wie in Fig. 1 gezeigt, in ein korrespondierendes aufnahmeartiges Gegenformschlusselement (nicht näher bezeichnet) an dem Pulvermodul 3 eingreift. In der Nichtbetriebsposition (eingefahrene Position) ist das Formschlusselement nicht formschlüssig mit dem Pulvermodul 3 zur Übertragung der ersten Antriebskraft auf das Pulvermodul 3 koppelbar oder gekoppelt, indem das Formschlusselement nicht formschlüssig mit dem Gegenformschlusselement zusammenwirkt, d. h. nicht in das korrespondierende aufnahmeartige Gegenformschlusselement an dem Pulvermodul 3 eingreift.

Die zweite Antriebseinrichtung 12 umfasst mehrere zweite Antriebseinheiten 16. Eine in Fig. 1 ersichtliche erste Antriebseinheit 16 ist zur Erzeugung einer die Tragstruktur 7 in eine Drehbewegung in einer ersten Drehrichtung, z. B. Uhrzeigersinn, um die zweite Bewegungsachse A2 versetzenden Antriebskraft eingerichtet, eine hinter der ersten Antriebseinheit 16 angeordnete und deshalb in Fig. 1 nicht ersichtliche weitere zweite Antriebseinheit 16 ist zur Erzeugung einer die Tragstruktur 7 in eine Drehbewegung in einer zweiten Drehrichtung, z. B. Gegenuhrzeigersinn, um die zweite Bewegungsachse A2 versetzenden zweiten Antriebskraft eingerichtet. Eine jeweilige Antriebseinheit 16 ist als Linearantrieb ausgebildet. Der Linearantrieb ist in dem Ausführungsbeispiel beispielhaft als ein hydraulischer oder pneumatischer Antriebszylinder ausgebildet.

Die zweite Antriebseinrichtung 12 umfasst jeweilige mit einer jeweiligen Antriebseinheit 16 gekoppelte Kraftübertragungseinheiten 17, welche zur Übertragung der von einer Antriebseinheit 16 erzeugten Antriebskraft auf die Tragstruktur 7 eingerichtet sind. Die Kraftübertragungseinheiten 17 umfassen ein mit der Tragstruktur 7 gekoppeltes Kraftübertragungselement 18, d. h. ein Schub- oder Zugelement, z. B. in Form eines Seilzugs, welches zur Übertragung von Schub- oder Zugkräften eingerichtet ist. Ein jeweiliges Kraftübertragungselement 18 ist über einen der Tragstruktur 7 zugeordneten Befestigungspunkt 19 außermittig an der Tragstruktur 7 befestigt.

Grundsätzlich wäre es auch denkbar, dass die Antriebseinheit 16 als Drehantrieb ausgebildet ist. Der Drehantrieb kann die zweite Bewegungsachse A2 bilden bzw. (direkt) in die zweite Bewegungsachse A2 integriert sein. Der Drehantrieb kann z. B. in eine die Tragstruktur 7 an der Arbeitsstation 4, 4a - 4c lagernden Lagereinrichtung 20 integriert sein.

Die Transporteinrichtung 2 kann, wie erwähnt, zum Transport von Pulvermodulen 3, 3a - 3c innerhalb einer Arbeitsstation 4, 4a - 4c eingerichtet sein. Anhand von Fig. 2 ist ersichtlich, dass eine Arbeitsstation 4, 4a - 4c, hier beispielhaft eine erste Arbeitsstation 4a, eine sich durch die Arbeitsstation 4a erstreckende, einen Teil einer Transportachse T der Anlage 1 bildende, längliche Transportbahn 20 und mit dieser kommunizierende pulvermodulspezifische Pulvermodularbeitspositionen 22a - 22c umfasst. Die Transportbahn ist 20 ist durch mehrere nacheinander geschaltet angeordnete Transporteinheiten 5 gebildet. Eine Pulvermodularbeitsposition 22a - 22c ist dagegen nur durch eine (einzige) Transporteinheit 5 gebildet.

Eine pulvermodulspezifische Pulvermodularbeitsposition 22a - 22c ist eine Position eines Pulvermoduls 3, 3a - 3c, in welcher ein jeweiliges Pulvermodul 3, 3a - 3c für einen Betrieb in seiner bestimmungsgemäßen Verwendung in der jeweiligen Arbeitsstation 4, 4a - 4c angeordnet ist. Eine erste Pulvermodularbeitsposition 22a ist für ein Baumodul, eine zweite Pulvermodularbeitspositionen 22b ist für ein Dosiermodul 3b und eine dritte Pulvermodularbeitspositionen 22c ist für ein Auffangmodul 22c vorgesehen. Die Pulvermodularbeitsposition 22a - 22c erstrecken sich entlang der Transportbahn 20 bzw. sind parallel zu dieser angeordnet.

Die Transporteinrichtung 2 ist zur Bewegung bzw. zum Transport von Pulvermodulen 3, 3a - 3c entlang der sich durch die Arbeitsstation 4a erstreckenden Transportbahn 20 sowie zur Bewegung bzw. zum Transport von Pulvermodulen 3, 3a - 3c von der Transportbahn 20 in jeweilige Pulvermodularbeitsposition 22a - 22c sowie zum Transport von Pulvermodulen 3, 3a - 3c von einer jeweiligen Pulvermodularbeitsposition 22a - 22c in die Transportbahn 20 eingerichtet.

Da die Pulvermodularbeitspositionen 22a - 22c (recht)winklig relativ zu der Transportbahn 20 angeordnet sind, ist zum Zwecke des Transports bzw. der Bewegung eines Pulvermoduls 3, 3a - 3c von einer Pulvermodularbeitsposition 22a - 22c in die Transportbahn 20 bzw. umgekehrt eine Drehung des Pulvermoduls 3, 3a - 3c um die zweite Bewegungsachse A2 und eine Bewegung des Pulvermoduls 3, 3a - 3c entlang der ersten Bewegungsachse A1 notwendig.

Für eine Übergabe eines Pulvermoduls 3, 3a - 3c z. B. von einer Transporteinheit 5 einer Pulvermodularbeitsposition 22a - 22c auf eine dieser unmittelbar benachbart angeordnete Transporteinheit 5 der Transportbahn 20 ist eine gleiche Ausrichtung der ersten Bewegungsachsen A1 der Transporteinheiten 5 erforderlich. Eine Übergabe eines Pulvermoduls 3, 3a - 3c von einer Transporteinheit 5 einer Pulvermodularbeitsposition 22a - 22c auf eine dieser unmittelbar benachbart angeordnete Transporteinheit 5 der Transportbahn 20 ist sonach mit einer Bewegung des Pulvermoduls 3, 3a - 3c entlang der jeweiligen ersten Bewegungsachse A1 verbunden. Je nach räumlicher Ausrichtung der jeweiligen ersten Bewegungsachsen A1 der Transporteinheiten 5 relativ zueinander kann für eine Übergabe eines Pulvermoduls 3, 3a - 3c von einer Transporteinheit 5 einer Pulvermodularbeitsposition 22a - 22c auf eine dieser unmittelbar benachbart angeordnete Transporteinheit der Transportbahn 20 (zusätzlich) eine Drehung der Tragstruktur 7 um die zweite Bewegungsachse A2 erforderlich sein. Die Drehung der Tragstruktur 7 dient dazu, die jeweiligen transporteinheitseitigen ersten Bewegungsachsen A1 gleich auszurichten. Eine Drehposition, in welcher die Tragstruktur einer Transporteinheit einer Pulvermodularbeitsposition 22a - 22c derart ausgerichtet ist, dass die erste Bewegungsachse A1 dieser Transporteinheit 5 gleich der ersten Bewegungsachse A1 einer dieser unmittelbar benachbart angeordneten Transporteinheit der Transportbahn 20 ist, kann als Übergabeposition der Transporteinheit bezeichnet werden. Der Abstand der Transporteinheiten 5 ist in allen Fällen selbstverständlich so (gering) gewählt, dass eine Übergabe eines Pulvermoduls 3, 3a - 3c problemlos möglich.

In Fig. 2 ist für eine Übergabe des in der Pulvermodularbeitsposition 22a angeordneten Baumoduls 3a in das Transportband 20, die mittlere Transporteinheit 5 des Transportbands 20 um 90° um die zweite Bewegungsachse A2 zu drehen, um eine entsprechende Übergabeposition zu realisieren.

Die Transporteinrichtung 2 kann auch zum Transport von Pulvermodulen 3, 3a - 3c zwischen wenigstens zwei Arbeitsstationen 4, 4a - 4c eingerichtet sein.

In Fig. 3 ist ein Ausführungsbeispiel mit mehreren unmittelbar benachbart angeordneten Arbeitsstationen 4, 4a - 4c gezeigt. Die Arbeitsstationen 4, 4a - 4c umfassen jeweils eine sich durch diese erstreckende Transportbahn 20. Die Transportbahnen 20 der Arbeitsstationen 4, 4a - 4c sind dabei miteinander fluchtend angeordnet oder ausgebildet und gehen unmittelbar ineinander über, sodass ein Pulvermodul 3, 3a - 3c von der Transportbahn 20 einer ersten Arbeitsstation 4, 4a - 4c auf die Transportbahn 20 einer anderen Arbeitsstation 4, 4a - 4c, bewegbar bzw. übergebbar ist. Die Transporteinrichtung 2 ist zum Transport eines Pulvermoduls 3, 3a - 3c entlang der sich durch die jeweilige Arbeitsstation 4, 4a - 4c erstreckenden Transportbahn 20 und/oder zum Transport eines Pulvermoduls 3, 3a - 3c von der Transportbahn 20 einer Arbeitsstation 4, 4a - 4c in eine Pulvermodularbeitsposition 22a - 22c der Arbeitsstation 4, 4a - 4c und/oder zum Transport eines Pulvermoduls 3, 3a - 3c von einer Pulvermodularbeitsposition 22a - 22c einer Arbeitsstation 4, 4a - 4c in die Transportbahn 20 der Arbeitsstation 4, 4a - 4c eingerichtet ist.

In Fig. 4 ist ein Ausführungsbeispiel mit räumlich beabstandet angeordneten Arbeitsstationen 4, 4a - 4c gezeigt. Die Arbeitsstationen 4, 4a - 4c umfassen wiederum jeweils eine sich durch diese erstreckende Transportbahn 20. Die Arbeitsstationen 4, 4a - 4c sind über eine sich zwischen diesen erstreckende Tunnelstruktur 21 miteinander verbunden. Ersichtlich erstrecken sich auch durch die Tunnelstruktur 21 Transportbahnen 20. Die Transportbahnen 20 der Arbeitsstationen 4, 4a - 4c und die Transportbahn 20 der Tunnelstruktur 21 sind jeweils miteinander fluchtend angeordnet oder ausgebildet und gehen unmittelbar ineinander über, sodass Pulvermodule 3, 3a - 3c von der Transportbahn 20 einer Arbeitsstation 4, 4a - 4c auf die Transportbahn 20 der Tunnelstruktur 21, oder umgekehrt, bewegbar bzw. übergebbar sind. Die Transporteinrichtung 2 ist auch zum Transport von Pulvermodulen 3, 3a - 3c zwischen Arbeitsstationen 4, 4a - 4c und der Tunnelstruktur 21 eingerichtet.

Um mit der Tunnelstruktur 21 verbunden werden zu können, können einzelne, mehrere oder sämtliche stationäre Arbeitsstationen 4, 4a - 4c einen Verbindungs- bzw. Übergabeabschnitt (nicht gezeigt) aufweisen, über welchen diese mit der Tunnelstruktur 21 verbunden sind. Ein Pulvermodul 3, 3a - 3c ist bei einer Übergabe von einer Arbeitsstation 4, 4a - 4c in die Tunnelstruktur 21, oder umgekehrt, sonach durch einen jeweiligen Verbindungsabschnitt zu bewegen.

Die Tunnelstruktur 21 weist mehrere inertisierbare Tunnelabschnitte 23 auf, in welchen wenigstens ein Pulvermodul 3, 3a- 3c bewegbar ist. Ein jeweiliger Tunnelabschnitt 23 begrenzt einen Hohlraum, in welchem jeweilige Transporteinheiten 5 zum Transport von Pulvermodulen 3, 3a - 3c angeordnet sind. In einem jeweiligen Tunnelabschnitt 23 sind Transporteinheiten 5 angeordnet und somit eine Transportbahn 20 definiert, entlang welcher ein Pulvermodul 3, 3a- 3c durch den Tunnelabschnitt 23 bewegbar ist. Die in jeweiligen Arbeitsstationen 4, 4a - 4c ausgebildeten Transportbahnen 20 können ebenso als Tunnelabschnitte erachtet werden.

Die Funktion der Tunnelstruktur 21 bzw. der dieser zugehörigen Tunnelabschnitte 23 besteht darin, wenigstens zwei unterschiedliche Arbeitsstationen 4, 4a - 4c der Anlage 1 miteinander zu verbinden. Die Verbindung jeweiliger Arbeitsstationen 4, 4a - 4c ermöglicht ein Bewegen von Pulvermodulen 3, 3a - 4c zwischen unterschiedlichen Arbeitsstationen 4, 4a - 4c der Anlage. Über einen oder mehrere Tunnelabschnitte 23 kann z. B. eine Prozessstation 4a mit einer Nachbearbeitungsstation 4b verbunden werden.

Die Steuerung sämtlicher Bewegungen der in der Anlage 1, insbesondere in der Tunnelstruktur 21, bewegten Pulvermodule 3, 3a - 3c erfolgt über eine zentrale Steuerungseinrichtung (nicht gezeigt), welche unmittelbar oder mittelbar mit jeweiligen Pulvermodulen 3, 3a - 3c, welche hierfür mit geeigneten, Kommunikationseinrichtungen (nicht gezeigt) ausgestattet sein können, z. B. funkbasiert, kommuniziert. In der Steuerungseinrichtung liegen zweckmäßig sämtliche für die Bewegung jeweiliger Pulvermodule 3, 3a - 3c innerhalb der Anlage 1 bzw. der Tunnelstruktur 21 relevanten Informationen, d. h. insbesondere Bewegungsinformation, d. h. z. B. Geschwindigkeitsinformation, Positionsinformation, d. h. z. B. Start- und Zielinformationen, Priorisierungsinformationen, etc. vor. Die Steuerung der Bewegungen der in der Anlage 1 bzw. in der Tunnelstruktur 21 bewegten Pulvermodule 3, 3a - 3c kann vollautomatisch erfolgen.

In Fig. 4 ist beispielhaft gezeigt, dass ein jeweiliger Tunnelabschnitt 23 in wenigstens einen weiteren, z. B. winklig zu diesem verlaufenden, Tunnelabschnitt 23 münden kann.

## Patentansprüche

1. Anlage (1) zur additiven Herstellung dreidimensionaler Objekte, umfassend eine oder mehrere Arbeitsstationen (4, 4a - 4c), welche zur Durchführung wenigstens eines Arbeitsvorgangs im Rahmen der additiven Herstellung dreidimensionaler Objekte eingerichtet sind, sowie eine Transporteinrichtung (2), welche zum Transport von im Rahmen der additiven Herstellung dreidimensionaler Objekte verwendeten Pulvermodulen (3, 3a - 3c) innerhalb einer Arbeitsstation (4, 4a - 4c) und/oder zwischen mehreren Arbeitsstationen (4, 4a - 4c) eingerichtet ist,
**dadurch gekennzeichnet, dass**
die Transporteinrichtung (2) mehrere Transporteinheiten (5) umfasst, wobei eine jeweilige Transporteinheit (5)
- eine eine Tragstruktur (7) umfassende Trageinrichtung (8), welche zum Tragen wenigstens eines in der Tragstruktur (7) angeordneten Pulvermoduls (3, 3a - 3c) eingerichtet ist,
- eine erste Antriebseinrichtung (10), welche zur Erzeugung einer Bewegung eines in der Tragstruktur (7) der Trageinrichtung (8) angeordneten Pulvermoduls (3, 3a - 3c) relativ zu der Tragstruktur (7) entlang einer, insbesondere linearen, ersten Bewegungsachse (A1), und
- eine zweite Antriebseinrichtung (12), welcher zur Erzeugung einer Drehbewegung der Tragstruktur (7) nebst einem etwaig darin angeordneten Pulvermodul (3, 3a - 3c) um eine zweite Bewegungsachse (A2) eingerichtet ist, umfasst.

2. Anlage nach Anspruch 1, **dadurch gekennzeichnet, dass** die erste Antriebseinrichtung (10) wenigstens eine, insbesondere als Linearantrieb ausgebildete oder einen solchen umfassende, erste Antriebseinheit (11), welche zur Erzeugung einer ein Pulvermodul (3, 3a - 3c) in eine Bewegung entlang der ersten Bewegungsachse (A1) versetzenden ersten Antriebskraft eingerichtet ist, und eine mit der ersten Antriebseinheit (11) gekoppelte Kraftübertragungseinheit (13), welche zur Übertragung der von der ersten Antriebseinheit (11) erzeugten ersten Antriebskraft auf das Pulvermodul (3, 3a - 3c) eingerichtet ist, umfasst.

3. Anlage nach Anspruch 2, **dadurch gekennzeichnet, dass** die Kraftübertragungseinheit (13) wenigstens ein mit der ersten Antriebseinheit (11) gekoppeltes Kraftübertragungselement (14) umfasst, wobei das Kraftübertragungselement (14) derart mit der ersten Antriebseinheit (11) gekoppelt ist, dass es bei Erzeugung der ein Pulvermodul (3, 3a - 3c) in eine Bewegung entlang der ersten Bewegungsachse (A1) versetzenden ersten Antriebskraft entlang der ersten Bewegungsachse (A1) bewegbar ist.

4. Anlage nach Anspruch 3, **dadurch gekennzeichnet, dass** das Kraftübertragungselement (14) zwischen einer Betriebsposition, in welcher das Kraftübertragungselement (14) mit einem Pulvermodul (3, 3a - 3c) zur Übertragung der ersten Antriebskraft auf das Pulvermodul (3, 3a - 3c) koppelbar oder gekoppelt ist, und einer Nichtbetriebsposition, in welcher das Kraftübertragungselement (14) nicht mit einem Pulvermodul (3, 3a - 3c) zur Übertragung der ersten Antriebskraft auf das Pulvermodul (3, 3a - 3c) koppelbar oder gekoppelt ist, bewegbar gelagert ist.

5. Anlage nach Anspruch 4, **dadurch gekennzeichnet, dass** das Kraftübertragungselement (14) als ein, insbesondere vorsprungartiges, Formschlusselement ausgebildet ist, wobei das Formschlusselement in der Betriebsposition mit einem Pulvermodul (3, 3a - 3c) zur Übertragung der ersten Antriebskraft auf das Pulvermodul (3, 3a - 3c) koppelbar oder gekoppelt ist, indem das Formschlusselement formschlüssig mit einem Gegenformschlusselement an dem Pulvermodul (3, 3a - 3c) zusammenwirkt, und das Formschlusselement in der Nichtbetriebsposition nicht mit dem Pulvermodul (3, 3a - 3c) zur Übertragung der ersten Antriebskraft auf das Pulvermodul (3, 3a - 3c) koppelbar oder gekoppelt ist, indem das Formschlusselement nicht formschlüssig mit dem Gegenformschlusselement an dem Pulvermodul (3, 3a - 3c) zusammenwirkt.

6. Anlage nach einem der vorhergehenden Ansprüche, **dadurch gekennzeichnet, dass** die zweite Antriebseinrichtung (12) wenigstens eine, insbesondere als Linear- oder Drehantrieb ausgebildete oder einen solchen umfassende, zweite Antriebseinheit (16) umfasst, welche zur Erzeugung einer die Tragstruktur (7) in eine Drehbewegung um die zweite Bewegungsachse (A2) versetzenden zweiten Antriebskraft eingerichtet ist.

7. Anlage nach Anspruch 6, **dadurch gekennzeichnet, dass** die zweite Antriebseinrichtung (12) eine mit der zweiten Antriebseinheit (16) gekoppelte Kraftübertragungseinheit (17) umfasst, welche zur Übertragung der von der zweiten Antriebseinheit (16) erzeugten zweiten Antriebskraft auf die Tragstruktur (7) eingerichtet ist.

8. Anlage nach Anspruch 6 oder 7, **dadurch gekennzeichnet, dass** die Kraftübertragungseinheit (17) ein mit der Tragstruktur (7) gekoppeltes Kraftübertragungselement (18), insbesondere ein Schub- oder Zugelement, welches zur Übertragung von Schub- oder Zugkräften eingerichtet ist, umfasst.

9. Anlage nach einem der Ansprüche 6 bis 8, **dadurch gekennzeichnet, dass** die zweite Antriebseinrichtung (12) einen, insbesondere in die zweite Bewegungsachse (A2) integrierten, Drehantrieb ausgebildet ist oder einen solchen umfasst.

10. Anlage nach einem der vorhergehenden Ansprüche, **dadurch gekennzeichnet, dass** die Transporteinrichtung (2) zum Transport von im Rahmen der additiven Herstellung dreidimensionaler Objekte verwendeten Pulvermodulen (3, 3a - 3c) innerhalb einer Arbeitsstation (4, 4a - 4c) eingerichtet ist, wobei eine Arbeitsstation (3, 3a - 3c) eine sich durch die Arbeitsstation (4, 4a - 4c) erstreckende Transportbahn (20) und wenigstens eine pulvermodulspezifische Pulvermodularbeitsposition (22, 22a - 22c) umfasst, wobei die Transporteinrichtung (2) zum Transport eines Pulvermoduls (3, 3a - 3c) entlang der sich durch die Arbeitsstation (4, 4a - 4c) erstreckenden Transportbahn (20) und/oder zum Transport eines Pulvermoduls (3, 3a - 3c) von der Transportbahn (20) in die wenigstens eine Pulvermodularbeitsposition (22, 22a - 22c) und/oder zum Transport eines Pulvermoduls (3, 3a - 3c) von der wenigstens einen Pulvermodularbeitsposition (22, 22a - 22c) in die Transportbahn (20) eingerichtet ist.

11. Anlage nach Anspruch 10, **dadurch gekennzeichnet, dass** die wenigstens eine Pulvermodularbeitsposition (22, 22a - 22c) winklig zu der Transportbahn (20) angeordnet oder ausgebildet ist.

12. Anlage nach einem der vorhergehenden Ansprüche, **dadurch gekennzeichnet, dass** die Transporteinrichtung (2) zum Transport von im Rahmen der additiven Herstellung dreidimensionaler Objekte verwendeten Pulvermodulen (3, 3a - 3c) zwischen wenigstens zwei räumlich unmittelbar benachbart angeordneten Arbeitsstationen (4, 4a - 4c) eingerichtet ist, wobei eine erste Arbeitsstation (4, 4a - 4c) eine sich durch die erste Arbeitsstation (4, 4a - 4c) erstreckende Transportbahn (20) umfasst, und eine unmittelbar benachbart angeordnete weitere Arbeitsstation (4, 4a - 4c) eine sich durch die weitere Arbeitsstation (4, 4a - 4c) erstreckende Transportbahn (20) umfasst, wobei die Transportbahn (20) der ersten Arbeitsstation (4, 4a - 4c) und die Transportbahn (20) der weiteren Arbeitsstationen (4, 4a - 4c) miteinander fluchtend angeordnet oder ausgebildet sind, sodass ein Pulvermodul (3, 3a - 3c) von der Transportbahn (20) der ersten Arbeitsstation (4, 4a - 4c) auf die Transportbahn (20) der weiteren Arbeitsstation (4, 4a - 4c), oder umgekehrt, übergebbar ist.

13. Anlage nach einem der vorhergehenden Ansprüche, **dadurch gekennzeichnet, dass** die Transporteinrichtung (2) zum Transport von im Rahmen der additiven Herstellung dreidimensionaler Objekte verwendeten Pulvermodulen (3, 3a - 3c) zwischen wenigstens zwei räumlich beabstandet angeordneten Arbeitsstationen (4, 4a - 4c) eingerichtet ist, wobei eine erste Arbeitsstation (4, 4a - 4c) eine sich durch die erste Arbeitsstation (4, 4a - 4c) erstreckende Transportbahn (20) umfasst, und eine unmittelbar benachbart angeordnete weitere Arbeitsstation (4, 4a - 4c) eine sich durch die weitere Arbeitsstation (4, 4a - 4c) erstreckende Transportbahn (20) umfasst, und eine sich zwischen der ersten Arbeitsstation (4, 4a - 4c) und der wenigstens einen weiteren Arbeitsstation (4, 4a - 4c) erstreckende Tunnelstruktur (21) wenigstens eine sich durch die Tunnelstruktur (21) erstreckende Transportbahn (20) umfasst, wobei
die Transportbahn (20) der ersten Arbeitsstation (4, 4a - 4c) und die Transportbahn (20) der Tunnelstruktur (21) sowie die Transportbahn (20) der weiteren Arbeitsstation (4, 4a - 4c) und die Transportbahn (20) der Tunnelstruktur (21) jeweils miteinander fluchtend angeordnet oder ausgebildet sind, sodass ein Pulvermodul (3, 3a - 3c) von der Transportbahn (20) der ersten Arbeitsstation (4, 4a - 4c) auf die Transportbahn (20) der Tunnelstruktur (21), oder umgekehrt, und ein Pulvermodul (3, 3a - 3c) von der Transportbahn (20) der weiteren Arbeitsstation (4, 4a - 4c) auf die Transportbahn (20) der Tunnelstruktur (21), oder umgekehrt, übergebbar ist.

14. Anlage nach einem der Ansprüche 10 bis 13, **dadurch gekennzeichnet, dass** die jeweiligen Transportbahnen (20) durch wenigstens eine Transporteinheit (5), insbesondere wenigstens zwei nacheinander geschaltet angeordnete oder ausgebildete Transporteinheiten (5), gebildet sind.

15. Anlage nach einem der vorhergehenden Ansprüche, **dadurch gekennzeichnet, dass** eine erste Arbeitsstation (4, 4a - 4c) eine Vorrichtung zur additiven Herstellung dreidimensionaler Objekte umfasst und eine weitere Arbeitsstation (4, 4a - 4c) eine Vorrichtung zum Auspacken eines additiv hergestellten Objekts oder eine Vorrichtung zum Reinigen und/oder Inertisieren von Pulvermodulen (3, 3a - 3c) umfasst.
